Europäisches Patentamt

European Patent Office

Office européen des brevets

(19)

(11) **EP 0 653 919 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.[7]: **A61B 5/087**, A61B 5/083, G01F 1/66

(21) Anmeldenummer: **94918345.3**

(22) Anmeldetag: **19.05.1994**

(86) Internationale Anmeldenummer:
**PCT/EP94/01629**

(87) Internationale Veröffentlichungsnummer:
**WO 94/28790 (22.12.1994 Gazette 1994/28)**

(54) **VERFAHREN UND VORRICHTUNG ZUR MESSUNG DER MOLMASSE VON GASEN ODER GASGEMISCHEN**

METHOD AND DEVICE FOR DETERMINING THE MOLECULAR WEIGHT OF GASES OR GAS MIXTURES

PROCEDE ET DISPOSITIF POUR LA MESURE DE LA MASSE MOLAIRE DE GAZ OU DE MELANGES DE GAZ

(84) Benannte Vertragsstaaten:
**AT BE CH DE ES FR GB IT LI NL SE**

(30) Priorität: **04.06.1993 DE 4318690**

(43) Veröffentlichungstag der Anmeldung:
**24.05.1995 Patentblatt 1995/21**

(73) Patentinhaber: **ndd Medizintechnik AG
8005 Zürich (CH)**

(72) Erfinder:
 • **HARNONCOURT, Karl
 A-8010 Graz (AT)**
 • **PÄTZOLD, Dieter
 A-8010 Graz (AT)**
 • **GUGGENBÜHL, Walter
 CH-8712 Stäfa (CH)**
 • **BUESS, Christian
 CH-8008 Zürich (CH)**

(74) Vertreter: **Laufhütte, Dieter, Dr.-Ing. et al
Lorenz-Seidler-Gossel
Widenmayerstrasse 23
80538 München (DE)**

(56) Entgegenhaltungen:
 **EP-A- 0 017 162        WO-A-92/02177
 CH-A- 669 463**

 • **PROCEEDINGS OF THE ANNUAL INTERNATIONAL CONFERENCE OF THE IEEE ENGINEERING IN MEDICINE AND BIOLOGY SOCIETY, Bd.13, Nr.4/5, Oktober 1991, US Seiten 1597 - 1598 BUESS ET AL. 'Ultrasonic respiration analysis'**
 • **PATENT ABSTRACTS OF JAPAN vol. 10, no. 30 (P-426) 5. Februar 1986 & JP,A,60 181 616 (TOSHIBA K. K.) 17. September 1985**
 • **PATENT ABSTRACTS OF JAPAN vol. 9, no. 269 (P-400) 26. Oktober 1985 & JP,A,60 117 149 (TOSHIBA K. K.) 24. Juni 1985 in der Anmeldung erwähnt**

**Beschreibung**

Die Erfindung betrifft ein Verfahren zur Messung der Molmasse von Gasen oder Gasgemischen.

Zur Bestimmung der Zusammensetzung von Gasen oder Gasgemischen werden im allgemeinen Massenspektrometer oder spezifische Gassensoren eingesetzt. Bei Massenspektrometern handelt es sich um aufwendige Geräte, welche eine sehr exakte Gasanalyse ermöglichen. Bei den Sensoren zur Konzentrationsmessung spezifischer Gase hingegen handelt es sich meist um einfachere Geräte, welche unter Ausnützung bestimmter physikalischer oder chemischer Eigenschaften eines bestimmten Gases, beispielsweise einer Absorptionslinie im Spektrum oder einer paramagnetischen Eigenschaft des Gases, die Konzentration dieses bestimmten Gases berechnen.

Aufgabe der Erfindung ist es, in einem freien Halterungsquerschnitt, also ohne jegliche Störung einer Strömungsgeometrie, die Molmasse eines Gases oder Gasgemisches bei geringem baulichen Aufwand möglichst genau zu bestimmen.

Erfindungsgemäß wird diese Aufgabe durch die Merkmale des kennzeichnenden Teils des Anspruchs 1 gelöst.

Bevorzugte Ausgestaltungen des Verfahrens sind in den sich anschließenden Unteransprüchen 2-8 enthalten.

Aus der JP 60-117149 A sind Ultraschall-Spirometer bekannt, bei denen ein Sender-/Empfangszellenpaar in einer Meßstrecke schräg zur Meßrohrachse angeordnet ist.

Aus der Schweizer Patentschrift CH 669463 A5 ist eine Einrichtung zur Messung von Strömungsquerschnitt, Durchflussvolumen, Temperatur und mittlerer Molmasse von Gasen und Gasgemischen in einem freien Rohrquerschnitt bekannt. Bei dem beschriebenen Ultraschall-Spirometer ist ein Sender-/Empfangszellenpaar in einer Meßstrecke schräg zur Meßrohrachse angeordnet. Dabei werden die gesuchten Größen aus den Laufzeiten von Schall- bzw. Ultraschallimpulsen, welche mit und gegen das strömende Medium wandern, sowie einer Gastemperaturmessung bestimmt.

In dem Aufsatz von Buess et al. "Ultrasonic Respiration Analysis", erschienen in "Proceedings of the Annual International Conference of the IEEE Engineering in Medicine and Biology Society", Bd.13, Nr. 4/5, Oktober 1991, S. 1597 - 1598 wird ein Gerät zur Atmungsanalyse beschrieben, daß sowohl die Messung der Strömungsgeschwindigkeit als auch der Molmasse der ein- bzw. ausgeatmeten Luft ermöglicht. Dazu sind schräg zum Strömungskanal Ultraschallsende/Empfangseinheiten angebracht, mit denen die Laufzeit eines Ultraschallimpulses durch das strömende Atemgas hindurch gemessen werden kann. Aus den Laufzeiten kann die Strömungsgeschwindigkeit errechnet werden. Zur Berechnung der Molmasse wird von der Beziehung zwischen Schallgeschwindigkeit, Gastemperatur und Molmasse in idealen Gasen ausgegangen. Die Schallgeschwindigkeit ergibt sich aus den Laufzeitmessungen. Der Temperaturverlauf entlang des Meßwegs wird mittels zweier Thermoelemente bestimmt.

Die Europäische Patentanmeldung EP 0 017 162 A1 beschreibt ein Gerät zur Lungenfunktionsanalyse, insbesondere zur Messung von funktionellen Atemvolumina bzw. Atemkapazitäten. Ein Atembeutel ist über ein erstes Ventilsystem an ein Atemrohr, und über ein weiteres Ventilsystem oder dergleichen an Testgasbehälter anschließbar. Gemäß dieser Patentanmeldung erfolgt die Analyse des Gases im Atembeutel durch kontinuierliche Dichtebestimmung des Gemisches von Testgas im Atembeutel. Über ein Dreiwege-Ventil ist das Atemrohr wahlweise mit dem Atembeutel oder mit der Umgebungsluft verbindbar.

Gemäß dem Unteranspruch 5 können die Laufzeiten der Schallimpulse ebenfalls zur Berechnung der Strömungsgeschwindigkeiten der Gase oder Gasgemische, deren Molmasse bestimmt werden, verwendet werden. Dabei können Linearitätsfehler der Strömungsgeschwindigkeitsberechnung vorteilhaft mittels der nachgeschalteten elektronischen Schaltung korrigiert werden.

Das zuvor beschriebene erfindungsgemäße Verfahren läßt sich insbesondere in der Lungenfunktionsdiagnostik einsetzen, da dort sowohl Ergebnisse der Strömungsmessung, wie auch solche von fortlaufenden Gasanalysen interessieren.

Bei den bislang in der Lungenfunktionsdiagnostik angewandten Verfahren wurden die Gasanalysen mittels mehrerer für die jeweilige Gaskomponenten spezifischen Sensoren durchgeführt. In der Regel ist über diese Sensoren im Nebenstrom gemessen worden, d. h. es wurde ein Teilstrom der zu messenden Gaszusammensetzung abgezweigt und in dieser Abzweigung mittels der Sensoren bestimmt. Diese vorbekannten Meßverfahren sind aufwendig und aufgrund der notwendigen Abzweigung eines Gasteilstroms auch verfälscht. Mittels des erfindungsgemäßen Verfahrens nach Anspruch 5 und den sich anschließenden Verfahrensansprüchen 6-8 läßt sich eine Lungenfunktionsdiagnostik in Echtzeit und on-line durchführen. Die Messungen können dabei mit einem Ultraschallsensor und nur einem zusätzlichen Sensor durchgeführt werden, was eine Ersparnis des apparativen Aufwandes mit sich bringt Insbesondere lassen sich mit dem Verfahren in einfacher Weise folgende Parameter bestimmen:

Die Lungenvolumina einschließlich FRC, die $N_2$—Auswaschkurve bzw. die Helium-Einwaschkurve, das Molmassenprofil der expiratorischen Alveolargaskurve. Durch die zuvor angesprochene Kombination eines Ultraschallsensors mit einem weiteren Gassensor lassen sich auch die Sauerstoffaufnahme und die $CO_2$—Abgabe und der respiratorische Quotient ($\underline{V}$ $CO_2/\underline{V}\ 0_2$) bestimmen.

Darüber hinaus ist es durch kontinuierliche Molmassenmessungen möglich, falls diese gleichzeitig mit der Volumenmessung kombiniert sind, bei der Sauerstoffaufnahme die aerobe/anaerobe Schwelle approximativ festzustellen, um beispielsweise Trainingseffekte zu überwachen.

Eine mögliche, aber nicht beanspruchte Vorrichtung zur Durchführung des erfindungsgemäßen Verfahrens besteht aus mindestens einer Schall bzw. Ultraschall-Sende-Empfangszelle, die schräg zur Halterungsachse angeordnet ist.

Weiterhin kann mindestens eine Temperatursonde entlang der dadurch gebildeten mindestens einen Meßstrecke angeordnet sein. Die schräg in den Meßkanal einlaufenden Kammer-Öffnungen der Kammern, in denen die Schall- bzw. Ultraschall-Sende-Empfangszellen jeweils angeordnet sind, können zur Vermeidung von Wirbeln in der Gasströmung mit schalldurchlässigen Netzen verschlossen sein.

In die Halterung kann auch ein auswechselbares Atemrohr einsteckbar sein, das am Übergang zur Meßstrecke Meßfenster in der Art aufweist, daß in entsprechenden Öffnungen Einsätze eingesetzt sind, die durchlässig für Schallwellen, aber weitgehend undurchlässig für Keime und Verschmutzungen sind. Dieser Gedanke ist auch schon Gegenstand der nicht vorveröffentlichten deutschen Patentanmeldung P 42 22 286. Durch das Vorsehen des auswechselbaren Atemrohres ist die Möglichkeit einer hygienisch einwandfeien Spirometrie gegeben.

Zur Vermeidung von störenden Schallreflexionen im Schallkanal können Dämpfungselemente vorgesehen sein, wobei vorzugsweise eine schallabsorbierende Oberfläche eines die Halterung bildenden Rohres bzw. des auswechselbaren Atemrohres vorgesehen sind.

An den Strömungsein- bzw. -ausgängen können Elemente zur Verwirbelung ein- bzw. ausströmender Gase bzw. Gasgemische vorhanden sein.

Zur Einstellung einer vorbestimmten Temperatur sowie zur Verhinderung von Kondensation kann in der Vorrichtung zusätzlich eine Heizung vorgesehen sein.

Außer dem die Halterung bildenden Rohr können gemäß einer vorteilhaft kompakten Ausführungsform Hohlräume zur Unterbringung von elektronischen Schaltbauteilen vorgesehen sein.

Eine Ansführungsform betrifft weiterhin eine Vorrichtung zur Bestimmung des funktionellen Residualvolumens (FRC) der Lunge in der Lungenfunktionsdiagnostik und weist vorzugsweise Merkmale der zuvor beschriebenen Vorrichtung auf. Bei dieser erfindungsgemäßen Vorrichtung ist an die Halterung oder das Atemrohr eine Zuschalteinrichtung einsetzbar, die eine Rohrverzweigung aufweist, an deren einen Ende ein mit $O_2$ oder einem Gasgemisch befüllbarer trägheitsarmer Beutel ansetzbar ist. An dem Ende der Rohrverzweigung, an dem der Beutel angesetzt wird, ist ein Einatmungsventil angeordnet. An dem anderen, freien Ende der Rohrverzweigung ist ein Ausatmungsventil angeordnet.

Gemäß einer weiteren Ausführungsform der Vorrichtung ist die Rohrverzweigung mit dem leicht austauschbaren Atemrohr einstückig ausgebildet. Eine andere Ausführungsform beinhaltet, daß die Rohrverzweigung mit den entsprechend eingesetzten Ventilen über einen Andockmechanismus mit dem Atemrohr oder dem leicht austauschbaren Atemrohr verbindbar ist. An dem trägheitsarmen Beutel kann ein Füllstutzen zur Befüllung mit dem einzuatmenden Gas vorhanden sein. In dieser Lösung ist eine Einrichtung für die Fremdgaszuschaltung, die unmittelbar an die Halterung oder an das leicht austauschbare Atemrohr, das als hygienisches Atmungs-Wegwerfrohr dient, angesetzt werden kann, verwirklicht. Die Gasein- bzw. Gasausschwemmungsvolumina können mittels einer entsprechenden Software aus dem Molmasse und Strömungsparametern zur Bestimmung des funktionellen Residualvolumens (FRC) der Lunge herangezogen werden. Die Zuschalteinrichtung ist dabei so gestaltet, daß sie während einer Expirationsphase einen Gasbehälter, d.h. den trägheitsarmen Beutel, so andockt, daß die Einatmung in der Folge aus diesem Gasbehälter erfolgt, während die Ausatmung nach außen geleitet wird. Durch das Vorsehen der beiden Ventile ist nun gewährleistet, daß eine Inspiration über kontaminierte Teile unmöglich ist. Die zusätzlichen Teile der zuvor erläuterten Vorrichtung können gegebenenfalls als Wegwerfteile ausgestaltet werden. Die Software für die simultane Auswertung der Strömungs- und Molmassesignale kann alle Einflüsse, die seitens der Gastemperatur, der Gasfeuchtigkeit und der Masse der Gaskomponenten gegeben sind, berücksichtigen. Die Berechnung des funktionellen Residualvolumens (FRC) der Lunge erfolgt beispielsweise nach den an sich bekannten Regeln der $N_2$-Ausschwemmethode oder nach analogen Methoden.

Eine weitere Ausführung betrifft eine Vorrichtung zur Messung der Molmasse von Gasen oder Gasgemischen zur Bestimmung diverser Ausatmungsparameter in der Lungenfunktionsdiagnostik, die vorzugsweise Merkmale der vorgenannten Ausführungsvarianten beinhaltet, bei der zusätzlich zu dem Schall- bzw. Ultraschall-Sende- und/oder -Empfangszellenpaar entweder ein $CO_2$-Sensor auf Infrarotbasis oder ein $O_2$-Sensor vorhanden ist.

Bei der Integration eines $CO_2$-Sensors ist eine simultane on-line Infrarotanalyse auf $CO_2$ bei der hygienischen Ultraschall-Spirometrie möglich. Die hygienische Ultraschall-Spirometrie umfaßt die leicht austauschbaren Atemrohre. Hier müssen gemäß einer vorteilhaften Ausgestaltung zwei optisch durchlässige Fenster an den Stellen angeordnet sein, an denen die Infrarotlichtquelle und der Infrarotsensor angeordnet sind.

Alternativ dazu können im Gehäuse die Infrarotlichtquelle und der Infrarotsensor an einer Stelle parallel angeordnet sein. In diesem Fall ist nur ein Fenster in der Halterung vorgesehen, dem gegenüberliegend ein Spiegel angeordnet ist.

Bei Integration eines $O_2$-Sensors kann in dem in der Halterung einsetzbaren leicht austauschbaren Innenrohr eine Öffnung vorgesehen sein, die mit einer dünnen $O_2$-permeablen, aber lichtundurchlässigen Membran verschlossen ist, wobei an der Außenseite ein 02-sensitiver Fluoreszenzindikator aufgebracht ist. Bei dem eingesetzten Atemrohr befindet sich an korrespondierender Stelle der Vorrichtung, d.h. innerhalb des Spirometerkopfes, eine Bohrung, die mit einem optischen Anschluß (beispielsweise Glasfaseranschluß) für das optische System bestückt werden kann. Dieses kann in an sich bekannter Weise aus einer Lichtquelle für das Anregungslicht und einem Sensor für die Signalimpulse bestehen.

Für jede der zuvor beschriebenen Varianten ist eine elektronische Auswertung vorgesehen, welche die Temperatur- und Feuchtigkeitseinflüsse berücksichtigt und aus dem Masse- und Gassignal in Kombination mit spirometrischen Werten, die von den Strömungssignalen abgeleitet werden, die bekannten Daten der Spiro-Ergometrie ermittelt.

Für die Feuchtigkeitsmessung können entsprechende zusätzliche Meßfühler in der Vorrichtung integriert sein.

Weitere Einzelheiten und Vorteile der vorliegenden Erfindung werden anhand mehrerer in der Zeichnung dargestellter Ausführungsbeispiele näher erläutert. Es zeigen:

Fig. 1: ein Blockdiagramm einer ersten Ausführungsform entsprechend der Erfindung,

Fig. 2: eine schematische Schnittdarstellung durch ein Teil der in Fig. 1 dargestellten Vorrichtung,

Fig. 3 u. 4: verschiedene Ausführungsbeispiele von austauschbaren Atemrohren mit Verzweigungsstücken und ansetzbaren Gasbehältern und

Fig. 5 u. 6: schematische Teilschnittdarstellungen der Halterung mit zusätzlich angeordneten Sensoren und eingesetzen austauschbaren Atemrohren.

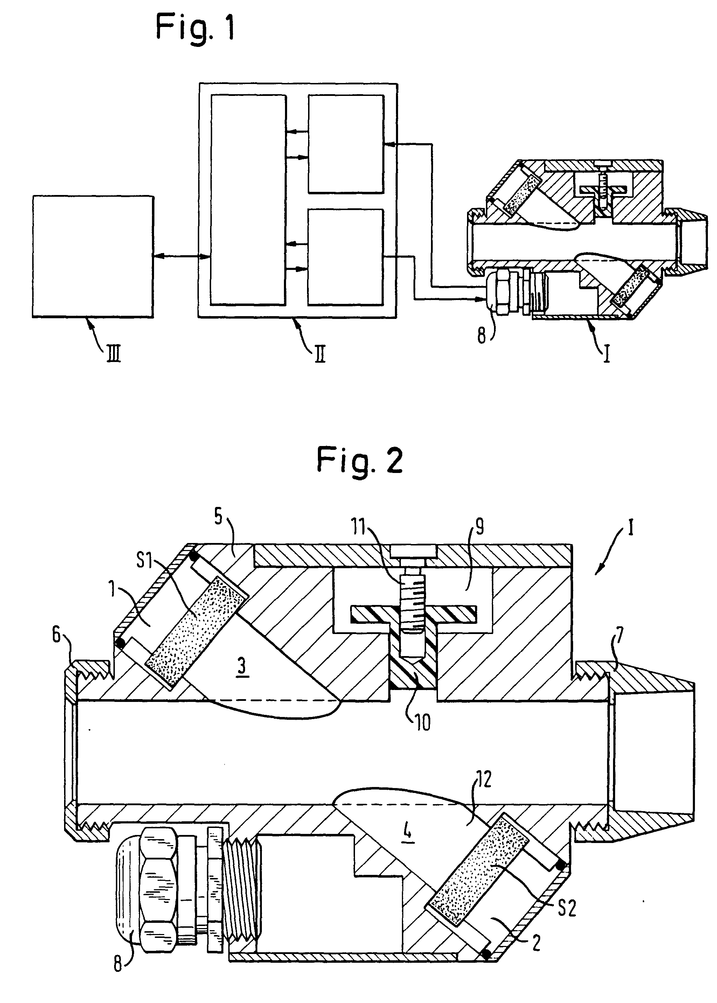

In Fig. 1 ist als Blockdiagramm das Durchflußmeßgerät zur Bestimmung physiologisch relevanter Lungenfunktionsparameter dargestellt. Einem Sensorkopf I ist eine Kontrolleinheit II und eine Datenverarbeitungsanlage III nachgeschaltet. In Fig. 2 ist der Sensorkopf schematisch dargestellt, der in den Kammern 1 und 2 Ultraschall-Sende-Empfangselemente S1 und S2 aufweist.
Dabei handelt es sich beispielsweise um Kondensatormikrophone, welche sich sowohl für den Sende- als auch für den Emfpangsbetrieb von Ultraschallsignalen eignen. Die schräg zu einer durchströmten rohrförmigen Halterung 5 angebrachten Zellen S1, S2 senden den Schall über die Abstrahlöffnungen 3,4 zu der gegenüberliegenden Zelle. Elektrisch isolierende seitliche Führungselemente, und ebenfalls elektrisch isolierende und zur Halterung 5 gewandte Diffusoren (in der vorliegenden Ausführungsvariante bestehend aus Netzen), positionieren die Hauptzellen fest in den Kammern 1 und 2. Von diesen Kammern führen Verbindungsbohrungen zu einer seitlich von der Halterung 5 angebrachten Vorverarbeitungselektronik. Diese dient hauptsächlich zur Vorverstärkung der Empfangssignale, sowie der Signalkonditionierung der Temperaturmeßstellen.

Ein in der Fig. 2 nicht gezeigtes Kabel, welches durch eine Kabelverschraubung 8 aus dem Sensorkopf austritt, verbindet den Sensor mit der zugehörigen Kontrolleinheit II (vgl. Fig. 1).

In der beschriebenen Ausführungsvariante enthält die Kammer 9 eine Vorrichtung zur Absenkung eines Thermoelementes in das Meßrohr 5. Mit Hilfe einer Schraube 11 wird ein elektrisch nicht leitendes Teil 10, in welches das Thermoelement eingelassen ist, in die Halterung 5 abgesenkt. In der zurückgezogenen Position kann die Halterung mit mechanischen Mitteln gereinigt werden, ohne daß das Thermoelement zerstört wird.

Ein weiteres Thermoelement dient zur Bestimmung der Gastemperatur in den Kammern 3, 4 vor den Sende-/Empfangselementen S1, S2. Es ist über eine weitere seitliche Bohrung 12 in der Kammer 4 positioniert.

Bei abgesenkter Thermoelementhalterung 10 weist die Halterung 5 über die gesamte Länge einen gleichbleibenden kreisförmigen Querschnitt auf. Die Abstrahlöffnungen 3 und 4 sind mit Netzen verschlossen, so daß auch in diesen Bereichen der kreisförmige Querschnitt der rohrförmigen Halterung 5 erhalten bleibt. Zur besseren Reinigung bzw. Sterilisation der Halterung 5 können diese Netze auch auf einem auswechselbaren Atemrohr montiert sein. Für den Meßkanal stehen zwei verschiedene, auswechselbare Abschlußstücke zur Verfügung: die kurze Version 6 dient zur Erzielung eines möglichst kleinen Meßvolumens des Sensors, die längere Version 7 ist so gestaltet, daß ein für medizinische Anwendung geeignetes Mund- oder Adapterstück eingeschoben werden kann.

Zusätzliche Heizungselemente, welche den Sensorkopf auf eine gegenüber der Umgebung erhöhte Temperatur bringen, können direkt in den seitlich die Vorverarbeitung für Elektronik vorhandenen Kammern, oder in von diesen Kammern wegführenden Bohrungen, untergebracht sein. Ein geringfügiges Heizen des Sensors nat den Vorteil, daß während der Expirationsphase Kondensation von Wasserdampf auf den Oberflächen der Halterung 5 vermieden werden kann. In medizinischen Anwendungen wird wegen der wasserdampfgesättigten Expirationsluft ein Heizen des Sensors in den meisten Fällen unumgänglich sein.

Die Funktionsweise des dargestellten Geräts wird anhand der Fig. 1 erläutert. Zu Beginn des Meßzyklus regt der Sender der Kontrolleinheit II alternierend eine der Sende-/Empfangszellen S1 oder S2 an. Von der angeregten Zelle wird ein Ultraschallsignal abgestrahlt, welches über die Meßstrecke zur gegenüberliegenden Sende-/Empfangszelle wandert. Die im Sensor selbst vorverstärkten Empfangssignale gelangen zurück zur Kontrolleinheit. Dort wird das Signal der empfangenden Sende-/Empfangszelle weiter verstärkt und einer elektronischen Schaltung zur Bestimmung der Ultraschall-Laufzeit zugeführt. Auf diese Weise können, mittels auf bekannte Weise kaskadierter elektronischer Zähler, hintereinander die Ultraschall-Laufzeiten von S1 nach S2 und von S2 nach S1 bestimmt werden. Die zur Bestimmung der Molmasse notwendigen Temperatursignale werden, nach einer elektronischen Vorverarbeitung der Thermoelementsignale im Sensorkopf selbst, ebenfalls der Kontrolleinheit zugeführt. Die in den Formeln gemäß der Patentansprüche 2 und 3 aufgeführte mittlere Gastemperatur T entlang der Schallübertragungsstrecke wird folgendermaßen bestimmt: Es wird angenommen, daß das in die Halterung eingeführte Thermoelement die mittlere Temperatur entlang der Teilstrecke in der Halterung bestimmt. Das in der Bohrung 12 seitlich vor der Zelle S1 positionierte Thermoelement bestimmt die mittlere Temperatur der beiden Teilstrecken in der Abstrahlöffnung 3 und 4. In der beschriebenen Ausführungsvariante des Sensorkopfs wird somit vereinfachend angenommen, daß sowohl Gastemperatur als auch Gaszusammensetzung in den beiden Kammern 3 und 4 gleich sind. Die mittlere Gastemperatur T wird mittels der prozentualen Streckenanteile, von durchströmten und nicht durchströmten Schallübertragungsteilstrecken, bestimmt.

Unter Verwendung der gemessenen Schall-Laufzeiten und Temperaturen berechnet der Prozessor der Kontrolleinheit Molmasse, Gasgeschwindigkeit und davon abgeleitete Größen. Bei der Berechnung gelangen die in den Patentansprüchen 4, 5, 6 und 7 aufgeführten Formeln zur Anwendung. Die vom Prozessor der Kontrolleinheit berechneten Größen können über eine serielle Schnittstelle an den Computer übertragen werden. Zur Durchführung physiologischer Lungenfunktionsuntersuchungen kann dieser Computer weiterführende Berechnungen der $CO_2$- bzw. $O_2$-Konzentration durchführen. Dabei wird mittels geeigneter Sensoren in hier nicht dargestellter Weise simultan der $CO_2$-Anteil und/oder der $O_2$-Anteil in der Atemluft bestimmt.

Ein Meßzyklus des Gerätes besteht somit aus 4 Phasen: Senden der Schallimpulse, Empfangen derselben an der gegenüberliegenden Sende-/Empfangszelle, Verarbeiten der anfallenden Daten, Datenausgabe und Datenübertragung an den angeschlossenen Computer. In der vorliegenden Ausführungsvariante der Vorrichtung dauert ein solcher Meßzyklus ca. 3 ms. Da während eines Meßzyklus nur eine Schall-Laufzeit gemessen wird, sind unter Bestimmung eines vollständigen Datensatzes je nach verwendeter Formel 2-4 Meßzyklen notwendig. Wird das Gerät in der Lungenfunktionsdiagnostik verwendet, kann der angeschlossene Computer zur Auswertung der Strömungs- und Molmassedaten verwendet werden. Mit Hilfe des Computers können beispielsweise Wash-Out-Tests zur Bestimmung des absoluten Lungenvolumens ausgewertet werden.

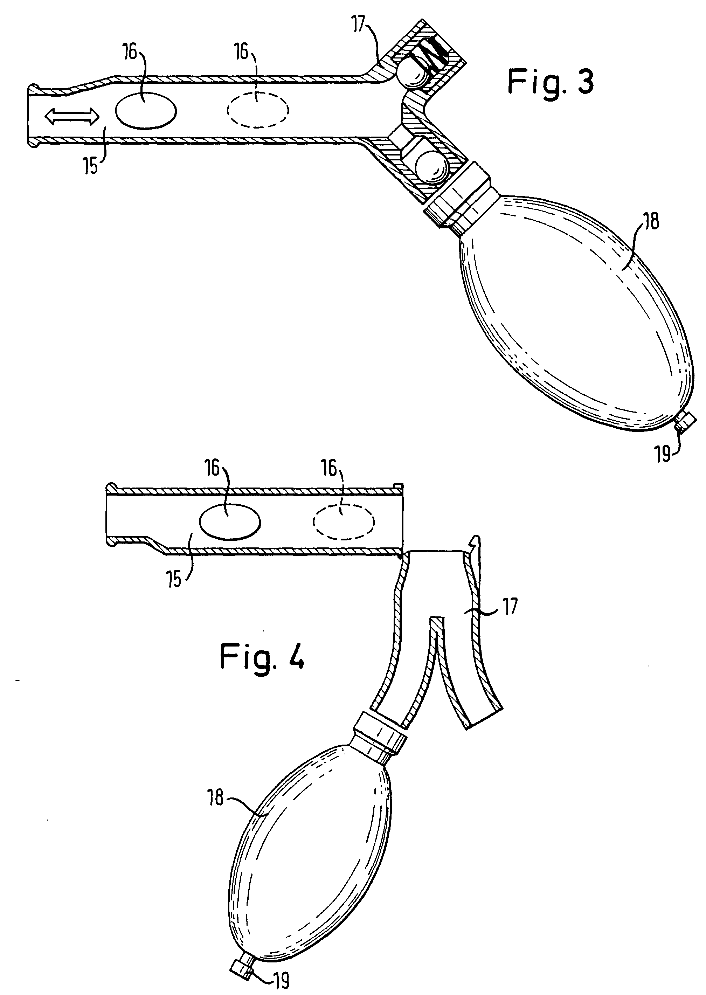

In den Fig. 3 und 4 sind Vorrichtungsbestandteile gezeigt, die zu einer definierten Gaszuführung verwendet werden. Mit 15 ist in den Fig. 3 und 4 jeweils das leicht austauschbare Atemrohr, das in die Halterung 5 eingesetzt wird, dargestellt. In dem Atemrohr sind mit geeigneten Netzen bzw. Membranen 16 verschlossene Öffnungen vorgesehen, die im eingesetzten Zustand des Atemrohres im Bereich der Abstrahlöffnungen 3 und 4 zu liegen kommen.

Das Verzweigungsteil 17 kommt außerhalb des Atemrohres 5 zu liegen. Die Ausführungsformen gemäß der Fig. 3 und 4 unterscheiden sich dadurch, daß in der Ausführungsform gemäß Fig. 3 das Verzweigungsteil 17 einstückig mit dem Innenrohr 15 ausgebildet ist. In der Ausführungsform gemäß Fig. 4 wird das Verzweigungsteil 17 über einen nicht näher dargestellten Andockmechanismus mit dem Innenrohr 15 verbunden. An das Verzweigungsteil 17 wird ein mit $O_2$ oder mit einem Gasgemisch befüllbarer trägheitsarmer Beutel 18 angesetzt. Dieser Beutel 18 weist einen mit einem Ventil verschließbaren Füllstutzen 19 zur Befüllung mit dem entsprechenden Gas bzw. Gasgemisch auf. Die Rohrverzweigung bzw. das Verzweigungsteil 17 weist an dem Ende, an dem der Beutel 18 angesetzt wird, ein hier nicht näher dargestelltes Einatmungsventil auf. An dem freien Rohrende weist das Verzweigungsteil 17 ein Ausatemventil auf.

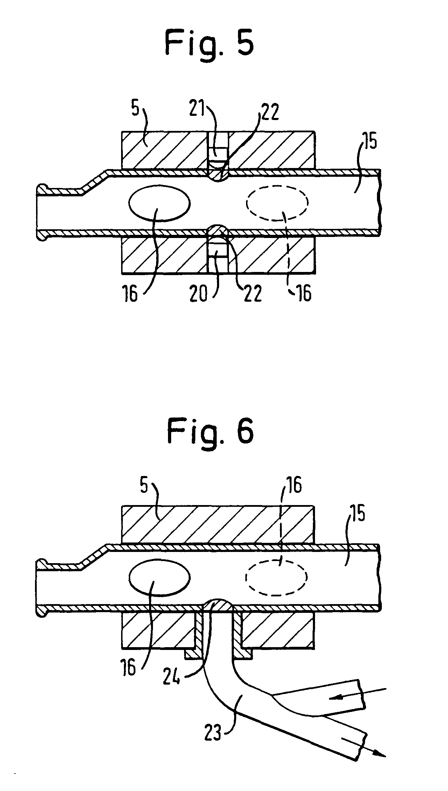

In der schematischen Darstellung gemäß Fig. 5 ist in der Halterung 5 zusätzlich eine Weißlicht- oder Infrarotlichtquelle 20 integriert. Dieser gegenüberliegend ist ein Infrarotsensor 21 angeordnet. Das in der Halterung eingesetzte leicht austauschbare Atemrohr 15 weist an der im eingebauten Zustand der Infrarotlichtquelle bzw. dem Infrarotsensor gegenüberliegenden Bereich optisch durchlässige Fenster 22 auf. Mit dem Infrarotsensor bzw. der Infrarotlichtquelle kann simultan zur Strömungsmessung bzw. zur Molmassenbestimmung über Ultraschall der $CO_2$-Gehalt gemessen werden.

In der Ausführungsform gemäß Fig. 6 ist in der Halterung 5 ein Glasfaserkabel 23 integriert, über das einerseits Anregungslicht für eine $O_2$-Analyse in die Halterung eingeleitet wird. Andererseits werden aufgenommene Signalimpulse an einen entsprechenden Sensor weitergeleitet.

Im Bereich der Einmündung des optischen Glasfaseranschlusses in der Halterung 5 weist das austauschbare Atemrohr 15 eine dünne, $O_2$-permeable,

aber lichtundurchlässige Membran 24 auf, an deren Außenseite ein 02-sensitiver Fluoreszenzindikator aufgebracht ist. Mittels dieser Anordnung läßt sich parallel zu der Strömungsmessung bzw. Molmassenbestimmung mittels Ultraschall der Sauerstoffgehalt im Sensorkopf simultan messen.

Gemäß der vorliegenden Erfindung kann mittels der hygienischen Ultraschall-Spirometrie und einem relativ wenig aufwendigen gasanalytischen Zusatz das gesamte Programm der Spiro-Ergometrie aufgenommen werden. Im Vergleich zu vorher bekannten Systemen hat dies den großen Vorzug, daß die Messungen on-line und real-time erfolgen. Weiterhin sind hier keine beweglichen Teile im System vorhanden, die zur Störung der Messung führen können. Damit ist eine sehr hohe Genauigkeit und eine minimale Fehlermöglichkeit verwirklicht.

## Patentansprüche

1. Verfahren zur Messung der Molmasse von Gasen oder Gasgemischen,
   wobei das zu untersuchende Gas oder Gasgemisch durch mindestens eine Halterung (5) geleitet wird, an der eine oder mehrere Schall- bzw. Ultraschall-Sende- bzw. Empfangszellen (S1, S2) als Meßstrecken, vorzugsweise schräg zur Halterungsachse angeordnet sind,
   wobei die Schall- bzw. Ultraschall-Sende-Empfangselemente (S1, S2) ein gepulstes Schallsignal abstrahlen,
   wobei die Laufzeiten der Schallimpulse über die Meßstrecke erfaßt werden, und
   wobei aus der Laufzeit der Schallimpulse die Molmasse bestimmt wird,
   **dadurch gekennzeichnet,**
   **daß** der Bestimmung der Molmasse die Laufzeiten der Schallimpulse über die im Strömungskanal liegenden Teile der Meßstrecke zugrundegelegt werden, die aus den über die gesamte Meßstrecke erfaßten Laufzeiten durch Subtraktion der Laufzeiten entlang der nicht im Strömungskanal liegenden Teile der Meßstrecke erhalten werden, und
   daß der Bestimmung der Molmasse die Temperatur des im Strömungskanal liegenden Teils der Meßstrecke zugrundegelegt wird.

2. Verfahren nach Anspruch 1, **dadurch gekennzeichnet, daß** die Molmasse M mit Hilfe der Formel

$$M = k_2 \cdot k_A \cdot T \cdot \left(\frac{(t_1 - t_3)\cdot(t_2 - t_4)}{t_1 + t_2 - t_3 - t_4}\right)^2$$

bestimmt wird, wobei $k_2$ eine dimensionsbehaftete Konstante, $k_A$ eine dimensionslose Konstante zur Adiabatenexponentkorrektur, T die mittlere Temperatur entlang des im Strömungskanal liegenden Teils der entsprechenden Meßstrecke, gegebenenfalls ermittelt aus einem der mehreren Temperatursensoren entlang dieser Meßstrecke, $t_1$ und $t_2$ die um aufbau- und meßbedingte Verzögerungen reduzierten Laufzeiten der Schallimpulse entlang der gesamten Meßstrecke, $t_3$ und $t_4$ die um aufbau- und meßbedingte Verzögerungen reduzierten Laufzeiten der Schallimpulse entlang der nicht im Strömungskanal liegenden Teile der Meßstrecke darstellen.

3. Verfahren nach Anspruch 2, **dadurch gekennzeichnet, daß** in der Formel gemäß Anspruch 2 $t_3$ und $t_4$ gleichgesetzt werden.

4. Verfahren nach einem der Ansprüche 1-3, **dadurch gekennzeichnet, daß** die Laufzeiten $t_1$, $t_2$, $t_3$, $t_4$ der Schallimpulse durch elektronische Zählungen bestimmt werden.

5. Verfahren nach einem der Ansprüche 1-4, **dadurch gekennzeichnet, daß** die Laufzeiten der Schallimpulse ebenfalls zur Berechnung der Strömungsgeschwindigkeit der Gase oder Gasgemische verwendet werden.

6. Verfahren nach einem der Ansprüche 1-5, **dadurch gekennzeichnet, daß** Linearitätsfehler der Strömungsgeschwindigkeitsberechnung mittels nachgeschalteter elektrischer Schaltungen korrigiert werden.

7. Verfahren nach einem der Ansprüche 1-6, **dadurch gekennzeichnet, daß** zur Bestimmung diverser Atmungsparameter die Molmasse zur Berechnung der $CO_2$- und $O_2$-Konzentrationsverläufe der Atemströmung verwendet wird.

8. Verfahren nach Anspruch 7, **dadurch gekennzeichnet, daß** die gemessenen Molmassenwerte und gemessenen Durchflußwerte als Ausgangsbasis für Lungenvolumenberechnungen verwendet werden und daß Lungenvolumina mittels Gasauswaschmethoden bestimmt werden.

## Claims

1. Method for measuring the molar mass of gases or gas mixtures,
   the gas or gas mixture to be examined being conducted through at least one mount (5) on which one or more sound and/or ultrasound transmitting and/or receiving cells (S1, S2) are arranged as measurement sections, preferably obliquely with respect to the mount access,
   the sound and/or ultrasound transmitting-receiving elements (S1, S2) radiating a pulsed sound signal, the propagation times of the sound pulses across the measurement section being detected, and the molar mass being determined from the propagation time of the sound pulses, **characterized in that** the determination of the molar mass is based on the propagation times of the sound pulses across the parts of the measurement section which lie in the flow channel, which are obtained from the propagation times detected across the entire measurement section by subtraction of the propagation times along the parts of the measurement section which do not lie in the flow channel, and in that the determination of the molar mass is based on the temperature of the part of the measurement section which lies in the flow channel.

2. Method according to Claim 1, **characterized in that** the molar mass M is determined with the aid of the formula

$$M = k_2 \cdot k_A \cdot T \cdot \left(\frac{(t_1 - t_3) \cdot (t_2 - t_4)}{t_1 + t_2 - t_3 - t_4}\right)^2$$

where $k_2$ represents a dimensional constant, $k_A$ represents a dimensionless constant for adiabatic exponent correction, T represents the average temperature along the part of the corresponding measurement section which lies in the flow channel, if appropriate determined from one of the plurality of temperature sensors along this measurement section, $t_1$ and $t_2$ represent the propagation times - reduced by construction- and measurement-dictated delays - of the sound pulses along the entire measurement section, and $t_3$ and $t_4$ represent the propagation times - reduced by construction- and measurement-dictated delays - of the sound pulses along the parts of the measurement section which do not lie in the flow channel.

3. Method according to Claim 2, **characterized in that** $t_3$ and $t_4$ are made equal in the formula in accordance with Claim 2.

4. Method according to one of Claims 1-3, **characterized in that** the propagation times $t_1$, $t_2$, $t_3$, $t_4$ of the sound pulses are determined by electronic counts.

5. Method according to one of Claims 1-4, **characterized in that** the propagation times of the sound pulses are likewise used for calculating the flow velocity of the gases or gas mixtures.

6. Method according to one of Claims 1-5, **characterized in that** linearity errors in the flow velocity calculation are corrected by means of electrical circuits connected downstream.

7. Method according to one of Claims 1-6, **characterized in that**, in order to determine diverse respiratory parameters, the molar mass is used for calculating the $CO_2$ and $O_2$ concentration profiles of the breath flow.

8. Method according to Claim 7, **characterized in that** the measured molar mass values and measured flow values are used as an initial basis for lung volume calculations, and in that lung volumes are determined by means of gas wash-out methods.

**Revendications**

1. Procédé pour la mesure de la masse molaire de gaz ou de mélanges de gaz, où le gaz ou le mélange de gaz à examiner est amené à passer à travers au moins un support (5) dans lequel sont disposées une ou plusieurs cellules d'émission et de réception de sons respectivement d'ultrasons (S1, S2) comme trajets de mesure, de préférence en biais relativement à l'axe de support,
   où les éléments d'émission et de réception de sons respectivement d'ultrasons (S1, S2) rayonnent un signal sonore pulsé,
   où les durées des impulsions sonores sont détectées sur le trajet de mesure et
   où est déterminé à partir de la durée des impulsions sonores la masse molaire, **caractérisé en ce que** la détermination de la masse molaire est basée sur les durées des impulsions sonores sur les parties du trajet de mesure se trouvant dans le canal d'écoulement qui sont obtenues à partir des durées détectées sur tout le trajet de mesure par soustraction des durées le long des parties du trajet de mesure ne se situant pas dans le canal d'écoulement et
   en ce que la détermination de la masse molaire est basée sur la température de la partie du trajet de mesure se situant dans le canal d'écoulement.

2. Procédé selon la revendication 1, **caractérisé en ce que** la masse molaire M est déterminée à l'aide de la formule

$$M = k_2 \cdot k_A \cdot T \cdot \left(\frac{(t_1 - t_3) \cdot (t_2 - t_4)}{t_1 + t_2 - t_3 - t_4}\right)^2$$

où $k_2$ est une constante dimensionnelle, $k_A$ une constante adimensionnelle pour la correction exponentielle adiabatique, T la température moyenne le long de la partie située dans le canal d'écoulement du trajet de mesure correspondant, le cas échéant déterminée à partir d'un de plusieurs capteurs de température le long de ce trajet de mesure, $t_1$ et $t_2$ les durées des impulsions sonores réduites des retards résultant de la composition et de la mesure le long de l'ensemble du trajet de mesure, $t_3$ et $t_4$ les durées des impulsions sonores réduites des retards résultant de la composition et de la mesure le long des parties du trajet de mesure ne se situant pas dans le canal d'écoulement.

3.  Procédé selon la revendication 2, **caractérisé en ce que** dans la formule selon la revendication 2, $t_3$ et $t_4$ sont égaux.

4.  Procédé selon l'une des revendications 1 à 3, **caractérisé en ce que** les durées $t_1$, $t_2$, $t_3$, $t_4$ des impulsions sonores sont déterminées par des comptages électroniques.

5.  Procédé selon l'une des revendications 1 à 4, **caractérisé en ce que** les durées des impulsions sonores sont utilisées également pour calculer la vitesse d'écoulement des gaz ou des mélanges de gaz.

6.  Procédé selon l'une des revendications 1 à 5, **caractérisé en ce que** des défauts de linéarité du calcul de la vitesse d'écoulement sont corrigés par des montages électriques disposés en aval.

7.  Procédé selon l'une des revendications 1 à 6, **caractérisé en ce que** pour la détermination de divers paramètres de respiration, la masse molaire est utilisée pour calculer les allures de concentration de $CO_2$ et $O_2$ du flux respiratoire.

8.  Procédé selon la revendication 7, **caractérisé en ce que** les valeurs de masse molaire mesurées et les valeurs d'écoulement mesurées sont utilisées comme base de départ pour les calculs du volume des poumons et en ce que les volumes des poumons sont déterminés au moyen de méthodes d'enlèvement par lavage de gaz.

# Fig. 1

# Fig. 2

Fig. 3

Fig. 4

# Fig. 5

# Fig. 6